# EUROPEAN PATENT APPLICATION

(11) **EP 3 584 291 A1**
(43) Date of publication of application: **25.12.2019**
(21) Application number: 18305768.6
(22) Date of filing: 19.06.2018
(51) Int. Cl.: C09D 9/04

(54) **HARD COATING STRIPPING AND DE-INKING AGENT**

(71) Applicant: Essilor International, 94220 Charenton-le-Pont (FR)
(72) Inventor: EAGERTON, William, Dallas, TX Texas 75235 (US)
(74) Representative: Jacobacci Coralis Harle

(57) **Abstract**

Disclosed herein are compositions and methods for removing ink from lenses during lens production processes. The compositions and methods are also useful for stripping cured and uncured hardcoats from coated lenses.

## Description

### FIELD OF THE INVENTION

The present invention generally relates to systems and methods for removal of ink and hardcoats from ophthalmic lenses.

### BACKGROUND

Various cleaning products that are capable of removing ink from ophthalmic lens are available commercially. The primary issue with most de-inking products is the inclusion of highly volatile organic components. The volatile organic components are primarily used as solvents and are therefore present in relatively large amounts. Relatively expensive and strict procedures must be followed for disposal of these organic components.

Many of the volatile organic components are hazardous to worker health and are associated with damaging effects on the environment. Many volatile organic components are flammable, have low flash points, and can produce explosive vapors. Some volatile organic components, for example, halogenated organic solvents, are ozone-depleting substances (ODS) and present an increased risk to the environment. Working with highly volatile organic solvents is also associated with higher production costs because of the additional safety equipment required to maintain a safe, breathable work environment.

One solution to the problems associated with organic-based cleaning products is a cleaning solution that employs a water-based solvent system. Aqueous solvent systems are less volatile and considerably safer than their organic-based counterparts. Disposal costs of water-based solutions are considerably less expensive than their organic-based counterparts. There is a need in the ophthalmic lens-production industry for safer, environmentally-friendly, and cost-effective cleaning solutions that perform as well as the conventional organic-based de-inking products on the market.

### SUMMARY

The invention belongs to the field of optical article technology and in particular relates to a composition and method for removing ink from ophthalmic lenses using a novel de-inking composition. In some aspects, a de-inking composition for removing ink from an ophthalmic lens comprises from 10 wt.% to 50 wt.%, preferably from 14 wt.% to 24 wt.%, more preferably from 17 wt.% to 21 wt.% of a first organic solvent; from 1 wt.% to 10 wt.%, preferably from 2 wt.% to 8 wt.%, more preferably from 4 wt.% to 6 wt.% of a second organic solvent; from 1 wt.% to 10 wt.%, preferably from 2 wt.% to 8 wt.%, more preferably from 3 wt.% to 5 wt.% of an alkaline component; from 0.5 wt.% to 5 wt.%, preferably from 1 wt.% to 3 wt.% of a surfactant; and a balance of water. The balance of water typically constitutes from 60 wt.% to 80 wt.% of the de-inking composition. In some embodiments, none of the first organic solvent, the second organic solvent, or the surfactant comprise a levulinate functional group.

In some aspects, the first organic solvent is a monoalkylene glycol or a dialkylene glycol. In further aspects, the first organic solvent is selected from the group consisting of diethylene glycol butyl ether, propylene glycol methyl ether, dipropylene glycol methyl ether, propylene glycol n-butyl ether, propylene glycol n-propyl ether, and mixtures thereof. Non-limiting examples of the de-inking composition alkaline component include sodium hydroxide and potassium hydroxide. In some embodiments, the surfactant is a non-ionic surfactant. Non-limiting examples of non-ionic surfactants include polyethylene glycol and polyproylene glycol. A preferred non-ionic surfactant is PPG-9-ethylhexeth-5 (CAS No. 64366-70-7).

In some embodiments, the second organic solvent comprises one or more terpenes. The terpene may be selected from the group consisting of D-limonene, R-limonene, L-limonene, S-limonene, and mixtures thereof. The de-inking composition may include additional components, including but not limited to preservatives, anti-oxidants, anti-bacterial components, stabilizers, emulsifiers, and other additives known to those of skill in the art.

Some embodiments of the disclosure are directed to a method for making an ophthalmic lens de-inking composition. The method comprises the steps of providing an amount of water, adding the alkaline component to the water, adding the second organic solvent to the water, adding the first organic solvent to the water, adding the surfactant to the water, and mixing the water and additional components to provide the de-inking composition.

"Ophthalmic lens," according to the disclosure, is defined as a lens adapted, namely for mounting in eyeglasses, whose function is to protect the eye and/or to correct vision. This lens can be an afocal, unifocal, bifocal, trifocal, or progressive lens. The ophthalmic lens may be corrective or un-corrective. Eyeglasses wherein ophthalmic lenses will be mounted could be either a traditional frame comprising two distinctive ophthalmic lenses, one for the right eye and one for the left eye, or a mask, visor, helmet sight, or goggle, wherein one ophthalmic lens faces simultaneously the right and the left eyes. Ophthalmic lenses may be produced with traditional geometry as a circle or may be produced to be fitted to an intended frame.

Any embodiment of any of the disclosed compositions and/or methods can consist of or consist essentially of-rather than comprise/include/contain/have-any of the described elements and/or features and/or steps. Thus, in any of the claims, the term "consisting of" or "consisting essentially of" can be substituted for any of the open-ended linking verbs recited above, in order to change the scope of a given claim from what it would otherwise be using the open-ended linking verb.

The term "substantially" and its variations are defined as being largely but not necessarily wholly what is specified as understood by one of ordinary skill in the art, and in one non-limiting embodiment substantially refers to ranges within 10%, within 5%, within 1%, or within 0.5%. The term "about" or "approximately" or "substantially unchanged" are defined as being close to as understood by one of ordinary skill in the art, and in one non-limiting embodiment the terms are defined to be within 10%, preferably within 5%, more preferably within 1%, and most preferably within 0.5%. Further, "substantially non-aqueous" refers to less than 5%, 4%, 3%, 2%, 1%, or less by weight or volume of water.

The use of the word "a" or "an" when used in conjunction with the term "comprising" in the claims and/or the specification may mean "one," but it is also consistent with the meaning of "one or more," "at least one," and "one or more than one."

As used in this specification and claim(s), the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The compositions and methods for their use can "comprise," "consist essentially of," or "consist of" any of the ingredients or steps disclosed throughout the specification. With respect to the transitional phase "consisting essentially of," in one non-limiting aspect, a basic and novel characteristic of the compositions and methods disclosed in this specification includes the ophthalmic lenses' abilities to provide enhanced color contrast.

Other objects, features and advantages of the present invention will become apparent from the following detailed description. It should be understood, however, that the detailed description and the examples, while indicating specific embodiments of the invention, are given by way of illustration only. Additionally, it is contemplated that changes and modifications within the spirit and scope of the invention will become apparent to those skilled in the art from this detailed description.

### DETAILED DESCRIPTION

Various features and advantageous details are explained more fully with reference to the non-limiting embodiments that are illustrated in the accompanying drawings and detailed in the following description. It should be understood, however, that the detailed description and the specific examples, while indicating embodiments, are given by way of illustration only, and not by way of limitation. Various substitutions, modifications, additions, and/or rearrangements will be apparent to those of ordinary skill in the art from this disclosure.

In the following description, numerous specific details are provided to provide a thorough understanding of the disclosed embodiments. One of ordinary skill in the relevant art will recognize, however, that the invention may be practiced without one or more of the specific details, or with other methods, components, materials, and so forth. In other instances, well-known structures, materials, or operations are not shown or described in detail to avoid obscuring aspects of the invention.

In ophthalmic lens de-inking operations, current and previously-employed de-inking compositions have been found to be associated with unacceptable health hazards. In attempting to identify replacement cleaning solutions, potential replacements have suffered from compatibility and/or health hazard issues. Identifying a de-inking composition that also acts as a stripping agent will simplify the hard coating process and reduce lens production costs.

### EXAMPLES

### Example 1: Evaluation of a Commercial Ink-Removing Formulation

The effectiveness of an organic-based commercial de-inking formulation was examined. Lenses were immersed in a Brenson ultrasonic bath containing the commercial de-inking formulation and set to 100% and 50 °C. The lenses were kept in the sonication bath until ink was no longer visible on lens. The lenses were then placed in a soft water bath for 30 seconds to remove de-inking solution. Lenses were subsequently rinsed in a de-ionized water bath and air dried. The amount of time elapsed between placing the lens in the ultrasonic bath and full removal of ink was reported as *Cleaning Time* in Table 1 below. The commercial de-inking formulation afforded excellent lens de-inking capabilities, however, the health hazard associated with the formulation was determined to be too high. A series of water-based alternatives to the non-aqueous commercial de-inking formulation were produced and examined.

**Table 1: Commercial De-Inking Formulation**

| **Lens** | **Cleaning Time (seconds)** | **Results** |
|---|---|---|
| 10-Orma -2.00s | 30 | acceptable |
| 10-MR8 piano | 12 | acceptable |
| 5-PC AW -2.00s | 22 | acceptable |
| 5-PC PDQ -2.00s | 26 | acceptable |

| | | |
|---|---|---|
| PC = polycarbonate. MR8 = 1.60 Essilor index substrate. AW = airwear hardcoating. PDQ = Gentex hard coating. | | |

### Example 2: Ink-Removal Formulations

A series of de-inking compositions were formulated. The composition of each formulation is provided in Tables 2A and 2B below. A primarliy organic, non-aqueous commercially-available de-inking formulation, different from the formulation in Example 1, was provided as a control.

**Table 2A De-Inking Formulations**

| | **De-Inking Formulation Examples** | | | | | | |
|---|---|---|---|---|---|---|---|
| Component | Control | A | B | C | D | E | F |
| Proprietary blend of ethoxylated nonylphenol, tetrapotassium pyrophosphate, and triethanolamine (J2L-9) | 100% | - | - | - | - | - | - |
| Propylene glycol methyl ether 1-Methoxy-2-propanol | - | - | - | 20% | 5% | 10% | 10% |
| | | | | 120g | 30g | 60g | 60g |
| Dipropylene glycol methyl ether | - | 20 | 14% | - | 15% | 10% | 10% |
| | | 120g | 120g | | 90g | 60g | 60g |
| Propylene glycol n-butyl ether | - | - | - | - | - | - | - |
| Propylene glycol n-propyl ether | - | - | - | - | - | - | - |
| Diethylene glycol butyl ether | - | - | - | - | - | - | - |
| D-limonene | - | - | - | - | - | - | - |
| NaOH/water (1:1 w:w) | - | 48g | 48g | 48g | 48g | 48g | 73g |
| Surfactant | - | 6g | 6g | 6g | 6g | 6g | 6g |
| Water | - | 450g | 850g | 450g | 426g | 426g | 550g |

**Table 2B De-Inking Formulations (continued)**

| | **De-Inking Formulation Examples** | | | | | | | |
|---|---|---|---|---|---|---|---|---|
| **Component** | Control | G | H | I | J | K | L | M |
| Proprietary blend of ethoxylated nonylphenol, tetrapotassium pyrophosphate, and triethanolamine (J2L-9) | 100% | - | - | - | - | - | - | |
| Propylene glycol methyl ether 1-Methoxy-2-propanol | - | 7% | - | 5% | 5% | - | - | |
| | | 42g | | 30g | 30g | | | |
| Dipropylene glycol methyl ether | - | 13% | - | - | - | - | - | |
| | | 78g | | | | | | |
| Propylene glycol n-butyl ether | - | - | - | - | - | - | 20% | |
| | | | | | | | 120g | |
| Propylene glycol n-propyl ether | - | - | 20% | 15% | 15% | - | - | |
| | | | 120g | 90g | 90g | | | |
| Diethylene glycol butyl ether | - | - | - | - | - | 20% | - | 20% |
| | | | | | | 120g | | 120g |
| D-limonene | - | - | - | - | - | - | - | 5 |
| | | | | | | | | 30g |
| NaOH/water (1:1w:w) | - | 73g | 73g | 73g | 48g | 48g | 48g | 48g |
| Surfactant | - | 6g | 6g | 6g | 6g | 6g | 6g | 6g |
| Water | - | 450g | 450g | 450g | 450g | 450g | 450g | 420g |

### Example 3: Evaluation of De-Inking Formulations

The data provided in Tables 3A and 3B include ink-removal results (reported as a percentage of total ink removed) for the de-inking formulations described in Tables 2A and 2B above. The de-inking experiments were performed using the following protocol: Lenses were immersed in a Brenson ultrasonic bath containing de-inking solutions and set to 100% and 50 °C. The lenses were kept in the sonication bath until ink was no longer visible on the lens. The lenses were then placed in a soft water bath for 30 seconds to remove de-inking solution. Lenses were subsequently rinsed in a de-ionized water bath and air dried. The results were reported as the percentage of ink removed.

The commercially-available de-inking formulation exhibited excellent de-inking abilities, however, it is significantly more expensive than the prepared formulations. Formulations I, J, K, and M demonstrated at least 95% ink removal for all lens substrates examined. The hardcoat-stripping ability of each of these formulations was subsequently examined.

In addition to the reported values of percentage of total ink removed, the following additional observations were recorded for some formulations: 1 Ink removed in 30 seconds. **2** Ink removed in 3 seconds. **3** New NTPC Y368 removed in 30 seconds; 6 month-old inked lenses not complete removal at 3 minutes. **4** Old PC ink removed at SW rinse state; ink was not adhered but still held by other means. **5** Occurred in soft water rinse; ink could be removed easily with a finger but adherence was just to high for rinse to remove. **6** Ink removed in 10 seconds. **7** Strips PDQ; may appear as ghost image if PDQ is only partially removed. **8** 75% of ink removal occurred in SW rinse; ink could be removed easily with a finger but adherence was just to high for rinse to remove. **9** new and old removed in 30 seconds. **10** Old UC MR7 stamped lenses have ghost image of stamping. **11** 3+year old SF lens had vague ghost imaged that wiped off easily by hand; ghost image was not etched in lens. **12** new lens ink removed in less than 10 seconds. **13** Ink removed at rinse step, not while in deinker; extra deinking time made little difference in removal; not actually adhered to lens but on lens via tension.

**Table 3A De-Inking Results**

| | **De-Inking Results (% ink removed)** | | | | | | |
|---|---|---|---|---|---|---|---|
| **Substrate** | Control | A | B | C | D | E | F |
| Y57 Essilor Orma UC | 100% | 10% | 75% | 0% | 80% rem | 100% | 100% |
| Gentex PC UC | Old 100% | 70% | 20% | 25% | 90 | 15% | 30% |
| Y368 Essilor Airwear PC NTPC | 100%/ 100% | 30% | 40% | 30% | 50 | 100% | 100% |
| Y368 Gentex PC PDQ | 100%/ 100% | 100%/ 100% | 100%/ 100% | 100%/ 100% | 100%/ 100% | New 100% | New 100% |
| Y57-66 Essilor MR7 UC | 100%/ 100% | 80% | 10% | 10% | 100% | 5% | 5%/10 0% |
| Essilor 1.67 HC | Old 100% | 40% | 40% | 30 | 50 | 20% | 100% |
| YNT1 Essilor PC Trans | New 100% | 50% | 100% | 20 | 50 | New 100% | New 100% |

| | | | | | | | |
|---|---|---|---|---|---|---|---|
| UC = uncoated. NTPC = non-tintable polycarbonate. HC = hard coated. Trans = Transitions. MR7 = 1.70 index substrate. | | | | | | | |

**Table 3B De-Inking Results (continued)**

| | **De-Inking Results (% ink removed)** | | | | | | |
|---|---|---|---|---|---|---|---|
| **Substrate** | G | H | I | J | K | L | M |
| Y57 Essilor Orma UC | 100% | 100%**¹** | 100% | 100% | 100%**¹** | 100%**²** | 100%**¹** |
| Gentex PC UC | 20% | 100% | Old 100% | Old 100% | Old 100% | 100 | Old 100% |
| Y368 Essilor Airwear PC NTPC | 100% | 80%/**³** 100% | 100%/ 100% | 100%/**⁴** 100% | 100%/ 100% | 50%**⁵** | 100%/ 100% |
| Y368 Gentex PC PDQ | New 100% | New**⁶** 100% | New 100% | New 100% | New**⁷** 100% | 75%**⁸** | New 100% |
| Y57-66 Essilor MR7 UC | 20%/ 100% | 100%**⁹** 100% | 95%/**¹⁰** 100% | 99%/^{**1**1} 100% | 100%/ 100% | 100%**¹²** | 100%/ 100% |
| Essilor 1.67 HC | 100% | 100% | Old 100% | Old 100% | Old 100% | 60%**¹³** | Old 100% |
| YNT1 Essilor PC Trans | New 100% | New 100% | New 100% | New 100% | New 100% | New 100% | New 100% |

### Example 4: Lens Hardcoat Stripping Results

The best-performing de-inking formulations (I, J, K, and M) identified in the experiments described above were subjected to hardcoat-stripping tests. The hardcoat-stripping results are provided in Table 3 below. Formulations J and M demonstrated the lowest average hardcoat-stripping time for all lenses examined.

**Table 4: Hardcoat Stripping Results**

| | **Hardcoat Stripping Time (minutes)** | | | |
|---|---|---|---|---|
| **Substrate** | **I** | **J** | **K** | **M** |
| PC M1.6 Uncured Stripping | 6 | 6 | 8 | 7 |
| PC M1.6 Cured Stripping | 9 | 9 | 12 | 11 |
| PC NT1 Stripping | 6 | 4 | 4 | 4 |
| PC NTPC stripping | 6 | 4 | 4 | 4 |
| PC PDQ stripping | 6 | 4 | 4 | 4 |
| MR7 T&L Factory HC stripping | 6 | 4 | 4 | 4 |

| | | | | |
|---|---|---|---|---|
| MR7 T&L= MR7 Thin and lite. NT1= Non-tintable 1, hard coated. M1.6= Mithril 1.6, hard coated. | | | | |

In summary, the a de-inking and hardcoat-stripping formulation disclosed herein performs as well as commercially-available counterparts. The ophthalmic lens de-inking composition disclosed herein is aggressive enough to strip uncured hard coatings, most factory coatings, and remove stamping inks. However, it is not so aggressive as to damage the lens itself. The de-inking and hardcoat-stripping formulation disclosed herein is a safer alternative to, and is considerably less expensive than, its commercially-available counterparts.

The claims are not to be interpreted as including means-plus- or step-plus-function limitations, unless such a limitation is explicitly recited in a given claim using the phrase(s) "means for" or "step for," respectively.

## Claims

1. A de-inking composition for removing ink from an ophthalmic lens, said composition comprising:
from 10 wt.% to 50 wt.% of a first organic solvent;
from 1 wt.% to 10 wt.% of a second organic solvent;
from 1 wt.% to 10 wt.% of an alkaline component;
from 0.5 wt.% to 5 wt.% of a surfactant; and
from 60 wt.% to 80 wt.% water.

2. The de-inking composition of claim 1, wherein none of the first organic solvent, the second organic solvent, or the surfactant comprise a levulinate functional group.

3. The de-inking composition of claim 1, wherein the first organic solvent is a monoalkylene glycol or a dialkylene glycol.

4. The de-inking composition of claim 1, wherein the first organic solvent is selected from the group consisting of diethylene glycol butyl ether, propylene glycol methyl ether, dipropylene glycol methyl ether, propylene glycol n-butyl ether, propylene glycol n-propyl ether, and mixtures thereof.

5. The de-inking composition of claim 1, wherein the second organic solvent comprises one or more terpenes.

6. The de-inking composition of claim 5, wherein the terpene is selected from the group consisting of D-limonene, R-limonene, L-limonene, S-limonene, or mixtures thereof.

7. The de-inking composition of claim 1, wherein the alkaline component is sodium hydroxide or potassium hydroxide.

8. The de-inking composition of claim 1, wherein the surfactant is a non-ionic surfactant.

9. The de-inking composition of claim 8, wherein the non-ionic surfactant is a polyethylene glycol or a polypropylene glycol.

10. The de-inking composition of claim 9, wherein the polypropylene glycol is PPG-9-ethylhexeth-5.

11. The de-inking composition of claim 1, wherein the first organic solvent is present in an amount ranging from 10 wt.% to 50 wt.%, preferably from 14 wt.% to 24 wt.%, more preferably from 17 wt.% to 21 wt.%.

12. The de-inking composition of claim 1, wherein the second organic solvent is present in an amount ranging from 2 wt.% to 8 wt.%, preferably from 4 wt.% to 6 wt.%.

13. The de-inking composition of claim 1, wherein the alkaline component is present in an amount ranging from 2 wt.% to 8 wt.%, preferably from 3 wt.% to 5 wt.%.

14. The de-inking composition of claim 1, wherein the surfactant is present in an amount ranging from 1 wt.% to 3 wt.%.

15. A method of making the de-inking composition of claim 1, comprising the steps of:
providing an amount of water;
adding the alkaline component to the water;
adding the second organic solvent to the water;
adding the first organic solvent to the water;
adding the surfactant to the water; and
mixing the water and added components to provide the de-inking composition.
